# EUROPEAN PATENT APPLICATION

(11) **EP 1 223 588 A1**
(43) Date of publication of application: **17.07.2002**
(21) Application number: 01400101.0
(22) Date of filing: 15.01.2001
(51) Int. Cl.: H01B 3/00, C08L 53/00, C08K 3/22, C08K 9/06, C08L 23/10, C08L 23/12

(54) **Olefin-based resin composition**

(71) Applicant: Sumitomo Wiring Systems, Ltd., Yokkaichi-City, Mie, 510-8503 (JP); SUMITOMO ELECTRIC INDUSTRIES, LTD., Osaka-shi, Osaka (JP)
(72) Inventor: Hase, Tatsuya, c/o Sumitomo Wiring Systems Ltd., Yokkaichi-City, Mie 510-8503 (JP); Fujimoto, Hiroshi, Sumitomo Wiring Systems Ltd., Yokkaichi-City, Mie 510-8503 (JP); Sato, Masashi, c/o Sumitomo Wiring Systems Ltd., Yokkaichi-City, Mie 510-8503 (JP)
(74) Representative: Uchida, Kenji

(57) **Abstract**

There is provided an olefin-based resin composition applied to the coatings of electrical cables used in automobiles. The coatings have neatly balanced properties to satisfy product requirements, such as wear and flame resistance, tensile strength, flexibility, and heat and freeze resistance. The olefin-based resin composition comprises:
(i) a polymeric material in an amount of 100 parts by weight which includes:
   (a) a propylene-type polymer portion;
   (b) a polyolefin portion treated with maleic acid anhydride; and
   (c) an olefin-type polymer portion; and
(ii) a metal hydroxide product. The propylene-type polymer portion (a) comprises at least one propylene polymer having a melt flow rate of about 5g/10 min. at the most, the propylene-type polymer portion accounting for 30 to 94% by weight of said polymeric material (i). The polyolefin portion treated with maleic acid anhydride (b) comprises at least one polyolefin, a proportion of 0,1 to 10% by weight of which is structurally modified through maleic acid anhydride treatment, thereby yielding a Shore D hardness of at least 50. The polyolefin portion accounts for a proportion of 1 to 20% by weight of the polymeric material (i). The olefin-type polymer portion (c) comprises at least one olefin-type polymer, a proportion of 0.1 to 10% by weight of which is structurally modified through maleic acid anhydride treatment, thereby yielding a Shore A hardness of 95 at the most. The olefin-type polymer portion accounts for a proportion of 5 to 50% by weight of the polymeric material (i). The metal hydroxide product (ii) comprises at least one metal hydroxide in an amount of 30 to 200 parts by weight relative to the polymeric material (i).

## Description

The present invention relates to olefin-based resin compositions, and more particularly halogen-free olefin-based resin compositions. These compositions are applied to coatings of the electrical cables used in automobiles. They must therefore satisfy the imperatives of automobile applications, such as wear resistance, flame resistance, tensile strength and flexibility. The invention also concerns also electrical cables coated with such compositions.

Poly (vinylchloride) has mainly been used as a coating material for automobile electrical cables. The reason is that this polymer has a good mechanical strength, formability at extrusion with electrical cables, flexibility and paintability. The polymer also provides an inexpensive base material.

Recently, however, global environmental concerns have compelled the car industry to reconsider the choice of product types used for automobile parts, including the coatings of electrical cables. As a result, halogen-free resin materials are currently replacing poly (vinylchloride).

There has been search into the wear-resistant resin compositions that do not generate toxic gases, such as halogen gases, when they are burned. Such compositions include halogen-free compositions containing a polyolefin-based polymer and a metal hydroxide as a flame retardant, as disclosed in Japanese patent applications published under Nos. HEI 7-176219 and HEI 7-78518. Further, Japanese patent application published under No. HEI 7-182930 describes a composition containing a polymeric material consisting of a polypropylene-type resin, a polyethylene treated with an unsaturated carboxylic acid, and an ethylene-type copolymer, on the one hand, and a metal hydroxide, on the other.

However, when such compositions are used in order to retard combustion or to perform auto-extinction of the flame, metal hydroxides must be added to the compositions in large amounts. The mechanical properties of the compositions, such as wear resistance and tensile strength, are then deteriorated a great deal. In order to avoid such deterioration in mechanical strength, it has been contemplated to add polypropylenes or a high-density polyethylene which are relatively hard resins. However, the coated electrical cables then become less flexible and less formable.

An object of the present invention is therefore to provide a halogen-free olefin-based resin composition which has well-balanced properties required for the coatings of electrical cable used in automobiles, such as wear resistance, flame resistance, tensile strength, flexibility, heat resistance and low-temperature resistance.

To this end, there is provided an olefin-based resin composition comprising:
(i) a polymeric material in an amount of 100 parts by weight which includes:
   (a) a propylene-type polymer portion;
   (b) a polyolefin portion treated with maleic acid anhydride; and
   (c) an olefin-type polymer portion; and
(ii) a metal hydroxide product. The propylene-type polymer portion (a) comprises at least one propylene polymer having a melt flow rate of about 5g/10 min. at the most, preferably between about 0.1 and about 5g/10 min., and the propylene-type polymer portion (a) accounts for a proportion of about 30 to about 94% by weight of the polymeric material (i). The polyolefin portion treated with maleic acid anhydride (b) comprises at least one polyolefin, a proportion of about 0.1 to about 10% by weight of which is structurally modified through maleic acid anhydride treatment, thereby yielding a Shore D hardness of at least about 50, and the polyolefin portion (b) accounts for a proportion of about 1 to about 20% by weight of the polymeric material (i). The olefin-type polymer portion (c) comprises at least one olefin-type polymer, a proportion of about 0.1 to about 10% by weight of which is structurally modified through maleic acid anhydride treatment, thereby yielding a Shore A hardness of about 95 at the most, and the olefin-type polymer portion accounts for a proportion of about 5 to about 50% by weight of the polymeric material (i). The metal hydroxide product (ii) comprises at least one metal hydroxide in an amount of about 30 to about 200 parts by weight relative to the polymeric material (i).

Preferably, the polyolefin portion treated with maleic acid anhydride (b) accounts for a proportion of about 5 to about 20% by weight of the polymeric material (i), the olefin-type polymer portion (c) accounts for a proportion of about 5 to about 30% by weight of the polymeric material (i), and the metal hydroxide product (ii) comprises at least one metal hydroxide in an amount of about 50 to about 150 parts by weight relative to said polymeric material (i).

Preferably yet, the metal hydroxide product (ii) comprises at least one metal hydroxide in an amount of about 70 to about 90 parts by weight relative to the polymeric material (i).

Suitably, the propylene-type polymer portion (a) comprises at least one polymer selected from the group consisting of a propylene-ethylene block copolymer in which propylene constitutes at least 50% by weight of the block copolymer, a propylene-ethylene random copolymer in which propylene constitutes at least 50% by weight of the random copolymer, and a propylene homopolymer.

Preferably, polyolefin portion treated with maleic acid anhydride (b) comprises at least polypropylene structurally modified through maleic acid anhydride treatment.

Typically, the olefin-type polymer portion (c) comprises at least an ethylene-vinyl acetate copolymer structurally modified through maleic acid anhydride treatment.

The metal hydroxide product (ii) in the above composition preferably comprises magnesium hydroxide.
In a suitable embodiment, the metal hydroxide product (ii), e.g. magnesium hydroxide, is treated with a silane-type coupling agent.

Preferably, such magnesium hydroxide includes the surface, at least part of which is treated with a silane-type coupling agent.

Further, the silane-type coupling agent preferably comprises an aminosilane-type coupling agent.

As understood from the foregoing, the olefin-based resin composition according to the invention is substantially free of halogen compounds.

The invention further concerns an electrical cable coated with such an olefin-based resin composition as mentioned above.

The above and the other objects, features and advantages of the invention will be made apparent from the following description of the preferred embodiments, given as non-limiting examples.

The propylene-type polymer portion having a melt flow rate (MFR) of about 5g/10 min. at the most, typically ranging between about 0.1 and about 5g/10 min., preferably includes propylene homopolymer, and a propylene-ethylene block or random copolymer, in which propylene accounts for at least 50% by weight of the corresponding block or random copolymer.

Examples of such propylene-type polymer portion having a MFR of about 5g/10 min. at maximum includes RB610A (block copolymer), RB410 (random copolymer) and RB110 (homopolymer), manufactured and commercialized by TOKUYAMA CORP.

When the proportion of such propylene-type polymer portion exceeds the above-mentioned upper limit of about 94% by weight of the polymeric material (i), the composition obtained is less flexible and less formable.

Conversely, when its proportion is less than the lower limit of about 30% by weight, the composition obtained is less resistant to wear.

In the above features, MFR is measured according to the method based on Standard JIS K 6921-2.

Examples of organic acid anhydride used for treating the polyolefin portion, so as to yield a Shore D hardness of at least about 50, include a carboxylic acid anhydride, e.g. maleic acid anhydride. Typically, about 0.1 to about 10% by weight of such polyolefin portion are treated with the organic acid anhydride. Examples of the anhydride-treated polyolefin portion (b) include polyethylene, polypropylene, polybutene, ethylene-vinyl acetate copolymer (EVA), ethylene-ethyl acrylate copolymer (EEA), ethylene-methyl acrylate copolymer (EMA), ethylene-methyl methacrylate copolymer, ethylene-propylene rubber and ethylene-butene copolymer. A preferred example is polypropylene treated with maleic acid anhydride, since it gives an inventive composition having a sufficient level of hardness and wear resistance, without performing cross-linking.

The proportion of the polyolefin portion treated with an organic acid anhydride (b), e.g. maleic acid anhydride, ranges from about 1 to about 20, preferably from about 5 to about 20% by weight of the polymeric material (i).

When its proportion exceeds the upper limit of about 20% by weight, the composition obtained is less flexible and less formable.

Conversely, when its proportion is less than the lower limit of about 1% by weight, the composition is less resistant to wear.

Examples of organic acid-anhydride used for treating the olefin-type polymer portion (c), so as to yield a Shore A hardness of about 95 at the most, include a carboxylic acid anhydride, e.g. maleic acid anhydride. Typically, about 0.1 to about 10% by weight of such olefin-type polymer portion (c) are treated with the organic acid anhydride. Examples of such olefin-type polymer portion include polyethylene, polypropylene, polybutene, ethylene-vinyl acetate copolymer (EVA), ethylene-ethyl acrylate copolymer (EEA), ethylene-methyl acrylate copolymer (EMA), ethylene-methyl methacrylate copolymer, ethylene-propylene rubber and ethylene-butene copolymer. A preferred olefin-type polymer portion is EVA treated with maleic acid anhydride.

The proportion of the olefin-type polymer portion (c) treated with an organic acid anhydride ranges from about 5 to about 50, preferably from about 5 to about 30% by weight of the polymeric material (i).

When its proportion exceeds the upper limit of about 50% by weight, the composition becomes less resistant to wear.

Conversely, when its proportion is less than the lower limit of about 5% by weight, the composition becomes less flexible and less formable.

Examples of the metal hydroxide product (ii) include magnesium hydroxide and aluminum hydroxide. Suitably, particles of the metal hydroxide product (ii) used in the invention are treated with a coupling agent, preferably a silane coupling agent or a higher fatty acid. Examples of the silane coupling agent include an aminosilane-type coupling agent, a vinylsilane coupling agent and an epoxysilane coupling agent. Examples of the higher fatty acid include stearic acid and oleic acid. Among the above examples, magnesium hydroxide treated with an aminosilane-type coupling agent is most preferably used.

The amount of metal hydroxide product (ii), added to 100 parts by weight of the polymeric material (i), ranges from about 30 to about 200, preferably from about 50 to about 150 , more preferably from about 70 to about 90 parts by weight.

When the amount of metal hydroxide product (ii) is too high, the composition has a smaller elongation rate, and it becomes less resistant to wear, and less flexible and less formable.

On the other hand, when its amount is too low, the composition becomes less resistant to flame.

The olefin-based resin composition of the present invention may further contain an appropriate amount of usual additives, such as anti-oxidants, copper-damage inhibitors and lubricants, insofar as they do not impair the above described product features.

The inventive olefin-based resin composition may be prepared by mixing and kneading the polymeric material (i) and the metal hydroxide product (ii) supra, according to a known method.

The resin compositions of the present invention may be coated around electrical cables, e.g. the electrical cables used in automobile, according to a known method.

When the inventive composition is applied to coatings of the electrical cables used in automobiles, these coatings satisfy requirements in respect of wear resistance, flame resistance, tensile strength, flexibility, heat resistance, freeze resistance, etc.. Obviously, these coatings generate substantially no halogen gas, since no halogen compound is specifically used therein.

The aminosilane-type coupling agent contains, in their molecule, functional groups reacting with inorganic compounds and those reacting with organic compounds. Accordingly, when a metal hydroxide product is treated with an aminosilane-type coupling agent, the former is bound to the latter through those functional groups reacting with inorganic compounds. When the metal hydroxide thus treated is added to the composition, it becomes firmly bound to the organic acid anhydride (e.g. maleic acid anhydride) combined with the polyolefin portion (b) or the olefin-type polymer portion (c), through the aminosilane's functional groups which react with organic compounds. As a result, the inventive composition comes to have markedly improved mechanical strengths e.g. wear resistance, without losing its flexibility.

When an amino group (as in the above case) and/or an epoxy group is (are) present at the oleophilic group side of the silane-type coupling agent, that or those group(s) react(s) with the organic acid anhydride which is combined with the polyolefin portion (b) or the olefin-type polymer portion (c). The hydrophilicity of the composition is then obviated, and its waterproofing increases. As a result, the composition becomes mechanically stronger, and more resistant to water.

The present invention will be described hereafter with reference to Examples and Comparative Examples.

### Examples 1 to 3 and Comparative Examples 1 to 4

The component compounds for each sample indicated in the upper part of the corresponding columns in Tables I, II and III were mixed in amounts indicated therein. The resultant mixtures were kneaded in a biaxial extruder at 250°C.

The obtained compositions was extruded around a twist conductive cable defined by ISO as 0.5sq (7/0.32 soft copper wires, indicating 7 wires with a diameter of 0.32mm, and forming a conductor with a cross-section area of 0.5mm²), to yield a coating thickness of 0.3mm. The extrusion was performed in dies having a diameter of 1.6mm and 1.0mm, respectively, and nipples; at a die temperature of 210 to 230°C and a cylinder temperature of 200 to 240°C; and at a line speed of 100m/min.

The terms in Tables are defined as follows.
"Propylene BP" indicates a propylene-ethylene block copolymer having a MFR of 0.5g/10 min.. Such a block copolymer includes "RB610A" manufactured by TOKUYAMA CORP..
"MAH-PP" indicates a polypropylene, 1% by weight of which is treated with maleic acid anhydride. An example of such polypropylene is "ER320P" having a Shore D hardness of 76, manufactured by JAPAN POLYOLEFIN KABUSHIKI KAISHA.
"MAH-EVA" indicates an ethylene-vinyl acetate copolymer, 1% by weight of which is treated with maleic acid anhydride. An example of such copolymer is "HPR VR103" having a Shore A hardness of 60, manufactured by MITSUI DUPONT CHEMICAL Kabushiki Kaisha.
"EVA" indicates an ethylene-vinyl acetate copolymer. An example of such copolymer is "EV360" containing 25% by weight of vinyl acetate, manufactured by MITSUI DUPONT CHEMICAL KABUSHIKI KAISHA.
"MAGNIFIN H5IV" indicates a magnesium hydroxide product treated with an aminosilane-type coupling agent (manufactured by ALUSUISSE MARTINSWERK GmbH).

The anti-aging agent used is a hindered phenol type compound. An example of such a compound is "TOMINOX TT", manufactured by YOSHITOMI FINECHEMICALS, Ltd..

The coated electrical cables of Examples 1 to 3 and Comparative Examples 1 to 4 were subjected to tests for flame resistance, tensile strength, elongation rate and wear resistance according to the method based on Standard JASO D611 (Japanese Automobile Standard Organization).

To test wear resistance, an abrasion frequency exceeding 300 times, averaged on 3 samples, was considered as good.

Flexibility was evaluated by hand feeling, when the coated electrical cable was bent.

Formability was evaluated by observing whether or not whiskers were formed, when coatings was stripped off from the end portion of the coated electrical cable.

The results of the tests are shown in the lower part of the corresponding columns in Tables I, II and III.

**Table I**

| | Ex.1 | Ex.2 | Ex.3 | Ex.4 | Ex.5 | Ex.6 |
|---|---|---|---|---|---|---|
| Propylene BP | 60 | 50 | 30 | 80 | 85 | 60 |
| MAH-PP | 10 | 10 | 20 | 10 | 10 | 20 |
| MAH-EVA | 30 | 40 | 50 | 10 | 5 | 20 |
| EVA | | | | | | |
| MAGNIFIN H5IV | 90 | 90 | 90 | 70 | 70 | 70 |
| Anti-aging agent | 1 | 1 | 1 | 1 | 1 | 1 |
| Total | 191 | 191 | 191 | 171 | 171 | 171 |
| Flame resistance | Good | Good | Good | Good | Good | Good |
| Tensile strength (Mpa) | 32.3 | 31.2 | 31.9 | 34.2 | 31.2 | 36.2 |
| Elongation rate (%) | 276 | 280 | 270 | 448 | 480 | 348 |
| Wear resistance (frequencies) | 2603 | 1290 | 511 | 660 | 1520 | 355 |
| Flexibility | Good | Good | Good | Good | Good | Good |
| Formability | Good | Good | Good | Good | Good | Good |
| Abbreviations: Ex: Example | | | | | | |

**Table II**

| | Com. Ex.1 | Com. Ex.2 | Com. Ex.3 | Com. Ex.4 | Com. Ex.5 | Com. Ex.6 |
|---|---|---|---|---|---|---|
| Propylene BP | 90 | 40 | 40 | 30 | 100 | 90 |
| MAH-PP | 10 | 30 | | 10 | | |
| MAH-EVA | | | 60 | 60 | | |
| EVA | | 30 | | | | 10 |
| MAGNIFIN H5IV | 120 | 90 | 90 | 90 | 70 | 70 |
| Anti-aging agent | 1 | 1 | 1 | 1 | 1 | 1 |
| Total | 221 | 191 | 191 | 191 | 171 | 171 |
| Flame resistance | Good | Good | Good | Good | Good | Good |
| Tensile strength (Mpa) | 22.2 | 33.9 | 26.3 | 31.8 | 34.2 | 36.0 |
| Elongation rate (%) | 437 | 107 | 380 | 280 | 683 | 658 |
| Wear resistance (frequencies) | 4726 | 4341 | 112 | 268 | 2131 | 128 |
| Flexibility | Bad | Bad | Good | Good | Bad | Good |
| Formability | Bad | Good | Good | Good | Bad | Good |
| Abbreviations: Com. Ex.: Comparative Example. | | | | | | |

**Table III**

| | Com. Ex.7 | Com. Ex.8 | Com. Ex.9 | Com Ex.10 | Com. Ex.11 |
|---|---|---|---|---|---|
| Propylene BP | 90 | 90 | 70 | 60 | 88 |
| MAH-PP | 10 | | | 10 | 10 |
| MAH-EVA | | 10 | 30 | 30 | 2 |
| EVA | | | | | |
| MAGNIFIN H5IV | 70 | 70 | 70 | 70 | 70 |
| Anti-aging agent | 1 | 1 | 1 | 1 | 1 |
| Total | 171 | 171 | 171 | 171 | 171 |
| Flame resistance | Good | Good | Good | Good | Good |
| Tensile strength (Mpa) | 39.5 | 33.2 | 31.2 | 32.5 | 36.4 |
| Elongation rate (%) | 535 | 670 | 650 | 410 | 520 |
| Wear resistance (frequencies) | 2862 | 231 | 84 | 148 | 2220 |
| Flexibility | Bad | Good | Good | Good | Bad |
| Formability | Bad | Good | Good | Good | Bad |
| Abbreviations: Com. Ex.: Comparative Example. | | | | | |

The results for Examples 1 to 3 are first compared with those for Comparative Examples 1 to 4. When the polyolefin portion treated with maleic acid anhydride (b) and having a shore D hardness of at least 50 are used in combination with the olefin-type polymer portion (c) treated with maleic acid anhydride and having a Shore A hardness of 95 at the most, and both are added to the composition in appropriate amounts, the composition becomes resistant to wear, without losing its flexibility and formability.

As is shown from the results on Comparative Example 2, when the polyolefin portion treated with maleic-acid anhydride (b) is added to the composition in a large amount, the composition loses its flexibility.

Likewise, as shown from the results on Comparative Examples 3 and 4, when EVA treated with maleic acid anhydride is used in a large amount, the composition prepared is less resistant to wear.

### Examples 4 to 6 and Comparative Examples 5 to 11

The component compounds for each sample shown in the upper part of the corresponding columns in Tables I, II and III were mixed in indicated amounts, and kneaded at 250°C. The compositions obtained were respectively extruded around an electrical cable (ISO conductor, 0.5sq, 7/compressed conductors, soft copper wire), to yield a coating having a thickness of 0.2mm. The extrusion was performed by using dies having a diameter of 1.3mm and 0.88mm, respectively, and nipples; at a die and a cylinder temperature of, respectively, 210 to 230°C and 200 to 240°C; and at a line speed of 100m/min..

The coated electrical cables corresponding to Examples 4 to 6 and Comparative Examples 5 to 11 were subjected to tests for flame resistance, tensile strength, tensile elongation, wear resistance, flexibility and formability, as described for Examples 1 to 3 and Comparative Examples 1 to 4.

The results of the tests are shown in the lower part of the corresponding columns in Tables I, II and III.

The results for Examples 4 to 6 are compared with those for Comparative Examples 5 to 11. When the polyolefin portion treated with maleic acid anhydride (b) and having a Shore D hardness of at least 50 are used in combination with the olefin-type polymer portion (c) treated with maleic acid anhydride and having a Shore A hardness of 95 at the most, the composition obtained becomes resistant to wear, without losing its flexibility and formability.

As is shown from the results on Example 5, when the olefin-type polymer portion (c) is added in a reduced amount, wear resistance of the composition increases correspondingly. However, as shown by the results on Comparative Example 11, when its amount is too small, the composition becomes less flexible.

As shown from the results on Example 6 and Comparative Example 10, when the amount of the olefin-type polymer portion (c) is increased, wear resistance of the composition decreases.

Conversely, when the polyolefin portion (b) is added in a suitable amount, the resulting composition has a well-balanced wear resistance and flexibility (see Example 6 and Comparative Example 10).

## Claims

1. An olefin-based resin composition comprising:
(i) a polymeric material in an amount of 100 parts by weight which includes:
(a) a propylene-type polymer portion;
(b) a polyolefin portion treated with maleic acid anhydride; and
(c) an olefin-type polymer portion; and
(ii) a metal hydroxide product;
**characterised in that** said propylene-type polymer portion (a) comprises at least one propylene polymer having a melt flow rate of about 5g/10 min. at the most, said propylene-type polymer portion accounting for a proportion of about 30 to about 94% by weight of said polymeric material (i); said polyolefin portion treated with maleic acid anhydride (b) comprises at least one polyolefin, a proportion of about 0.1 to about 10% by weight of which is structurally modified through maleic acid anhydride treatment, thereby yielding a Shore D hardness of at least about 50, said polyolefin portion accounting for a proportion of about 1 to about 20% by weight of said polymeric material (i); said olefin-type polymer portion (c) comprises at least one olefin-type polymer, a proportion of about 0.1 to about 10% by weight of which is structurally modified through maleic acid anhydride treatment, thereby yielding a Shore A hardness of about 95 at the most, said olefin-type polymer portion accounting for a proportion of about 5 to about 50% by weight of said polymeric material (i); and said metal hydroxide product (ii) comprises at least one metal hydroxide in an amount of about 30 to about 200 parts by weight relative to said polymeric material (i).

2. The olefin-based resin composition according to claim 1, wherein said polyolefin portion treated with maleic acid anhydride (b) accounts for a proportion of about 5 to about 20% by weight of said polymeric material (i), said olefin-type polymer portion (c) accounts for a proportion of about 5 to about 30% by weight of said polymeric material (i), and said metal hydroxide product (ii) comprises at least one metal hydroxide in an amount of about 50 to about 150 parts by weight relative to said polymeric material (i).

3. The olefin-based resin composition according to claim 1 or 2, wherein said metal hydroxide product (ii) comprises at least one metal hydroxide in an amount of about 70 to about 90 parts by weight relative to said polymeric material (i).

4. The olefin-based resin composition according to any one of claims 1 to 3, wherein said propylene-type polymer portion (a) comprises at least one polymer selected from the group consisting of a propylene-ethylene block copolymer in which propylene constitutes at least 50% by weight of said block copolymer, a propylene-ethylene random copolymer in which propylene constitutes at least 50% by weight of said random copolymer, and a propylene homopolymer.

5. The olefin-based resin composition according to any one of claims 1 to 4, wherein said polyolefin portion treated with maleic acid anhydride (b) comprises at least polypropylene structurally modified through maleic acid anhydride treatment.

6. The olefin-based resin composition according to any one of claims 1 to 5, wherein said olefin-type polymer portion (c) comprises at least an ethylene-vinyl acetate copolymer structurally modified through maleic acid anhydride treatment.

7. The olefin-based resin composition according to any one of claims 1 to 6, wherein said metal hydroxide product (ii) comprises magnesium hydroxide.

8. The olefin-based resin composition according to any one of claims 1 to 7, wherein said metal hydroxide product (ii) is treated with a silane-type coupling agent.

9. The olefin-based resin composition according to claim 8, wherein said silane-type coupling agent comprises an aminosilane-type coupling agent.

10. The olefin-based resin composition defined by any one of claims 1 to 9, which is substantially free of halogen.

11. An electrical cable coated with the olefin-based resin composition defined by any one of claims 1 to 10.
